# EUROPEAN PATENT SPECIFICATION

(11) **EP 2 922 734 B1**
(45) Date of publication and mention of the grant of the patent: **09.03.2022**
(21) Application number: 12798213.0
(22) Date of filing: 21.11.2012
(51) Int. Cl.: B60S 1/38

(54) **WINDSCREEN WIPER DEVICE**
SCHEIBENWISCHERVORRICHTUNG
DISPOSITIF D'ESSUIE-GLACE DE PARE-BRISE

(43) Date of publication of application: 30.09.2015
(73) Proprietor: Federal-Mogul S.A., 6790 Aubange (BE)
(72) Inventor: FRISCIONI, Thomas, 54135 Mexy (FR)
(74) Representative: Hooiveld, Arjen Jan Winfried
(86) International application number: PCT/EP2012/073237
(87) International publication number: WO 2014/079488

(56) References cited:
- EP-A1- 2 241 484
- DE-A1-102008 012 466
- FR-A1- 2 928 887
- JP-A- 2007 176 459
- US-A1- 2008 276 404

## Description

The present invention relates to a windscreen wiper device of the flat blade type comprising an elastic, elongated carrier element, as well as an elongated wiper blade of a flexible material, which can be placed in abutment with a windscreen to be wiped, which wiper blade includes at least one groove, in which groove a longitudinal strip of the carrier element is disposed, wherein free ends of said wiper blade are connected to a respective end cap, wherein said end cap comprises engaging members sidewardly engaging said wiper blade from the outside, wherein said engaging members comprise retaining means for retaining said wiper blade onto said end cap, which windscreen wiper device comprises a connecting device for an oscillating wiper arm, and wherein said wiper blade is provided with a spoiler at a side thereof facing away from said windscreen to be wiped.

Such a windscreen wiper device is generally known (see for instance document JP 2007 176459 A). The prior art windscreen wiper device is in particular designed as a "flat blade" or "yokeless blade", wherein use is no longer made of several yokes pivotally connected to each other, but wherein the wiper blade is biased by the carrier element, as a result of which it exhibits a specific curvature.

One drawback of the prior art windscreen wiper device is the fact that the end caps and the wiper blade are not interconnected in a durable, solid and aerodynamic manner.

The object of the invention is to overcome this drawback of the prior art as indicated above, in particular to provide a windscreen wiper device, wherein the wiper blade may not come loose from the end caps, and wherein the wiper blade has outstanding aerodynamic properties.

In order to accomplish that objective, a windscreen wiper device of the kind referred to in the introduction is characterized according to claim 1. In mounted position of said windscreen wiper device said plane extends parallel to a windscreen to be wiped. In the framework of the present invention said end cap at the location of its top surface does not extend beyond and above said top surface of said spoiler. Hence, the end cap and the wiper blade are interconnected in such a manner that the top surface of said end cap is flush with the top surface of said spoiler, so that the present windscreen wiper device has excellent aerodynamic properties. The wiper blade is particularly made of an elastomeric material through an extrusion operation.

As said end cap and said spoiler mutually have the same height (taking into account tolerances), the present windscreen wiper device locally has a very flat construction, so that in mounted position said windscreen wiper device does not interfere with other parts of a car and is hidden behind a bonnet thereof. Further, said flat end cap ensures that in mounted position it does not interfere with channel-like part of an oscillating arm of the present windscreen wiper device.

It is noted that the present invention is not restricted to windscreen wiper devices for cars, but that it also relates to windscreen wiper devices for rail coaches and all other (fast) vehicles.

In a preferred embodiment of a windscreen wiper device in accordance with the invention said end cap and said spoiler are flush-interconnected through a snapping operation, so that said top surface of said end cap and said top surface of said spoiler extend in the same plane. In use said plane extends parallel to a windscreen to be wiped.

In another preferred embodiment of a windscreen wiper device according to the invention said end cap is slid over one of said free ends of said wiper blade in a longitudinal direction thereof, wherein said top surface of said end cap comprises a horizontal slit open at one end, and wherein a part of said spoiler is slid inside said slit. Said horizontal slit in said end cap is preferably realized through a specially designed mold. A molding operation ensures that said slit is locally formed in a reliable and controllable manner.

In another preferred embodiment of a windscreen wiper device in accordance with the invention said end cap is slid over one of said free ends of said wiper blade in a longitudinal direction thereof, wherein said spoiler is removed along a portion of the length of said wiper blade at said free end of said wiper blade so as to form an insertion part of said spoiler, and wherein said insertion part of said spoiler is slid inside said end cap. Particularly, a cutting operation is used to controllably and reliably remove said spoiler in part.

In a windscreen wiper device according to the invention said end cap comprises engaging members sidewardly engaging said wiper blade from the outside, wherein said engaging members comprise retaining means for retaining said wiper blade onto said end cap. Particularly, said engaging members and said retaining means are in one piece. Preferably, a molding operation would ensure that said engaging members and said retaining means can be formed in a reliable and controllable manner, without high costs as far as additional tools and equipment are concerned.

In another preferred embodiment of a windscreen wiper device according to the invention said engaging members and said retaining means are formed by inwardly bent parts of edges of lateral sides of said connecting piece.

In another preferred embodiment of a windscreen wiper device in accordance with the invention said retaining means comprise at least one sidewardly extending gripping tooth for gripping an intermediate web of said wiper blade. Particularly, said retaining means comprise at least two sidewardly extending, opposing gripping teeth.

US 2008/276404 relates to a non-articulated wiper blade consisting of a wiper strip comprising a wiper lip, two flexible rails and a connection device, the flexible rails engaging in lateral, outwardly open longitudinal grooves of the wiper strip and being surrounded by feet of a metal claw of the connection device, on the outer narrow side thereof. The claw feet are bent around the narrow side of the spring rails during the assembly of the metal claw, at least one plastic layer and/or immediate layer being arranged between the claw feet and the spring rails. Said layers are produced separately from the wiper strip, are adapted to the claw feet and have a high friction coefficient on the surface thereof facing the metal claw and the spring rails.

The invention will now be explained in more detail with reference to figures illustrated in a drawing, wherein:
- figure 1 is a perspective, schematic view of a windscreen wiper device in accordance with the prior art;
- figure 2 shows different views on an interconnection between an end cap and a spoiler used in the windscreen wiper device of figure 1; and
- figures 3 and 4 correspond to figure 2, with the difference that figure 3 refers to a first embodiment of the invention and figure 4 relates to a second embodiment of the present invention.

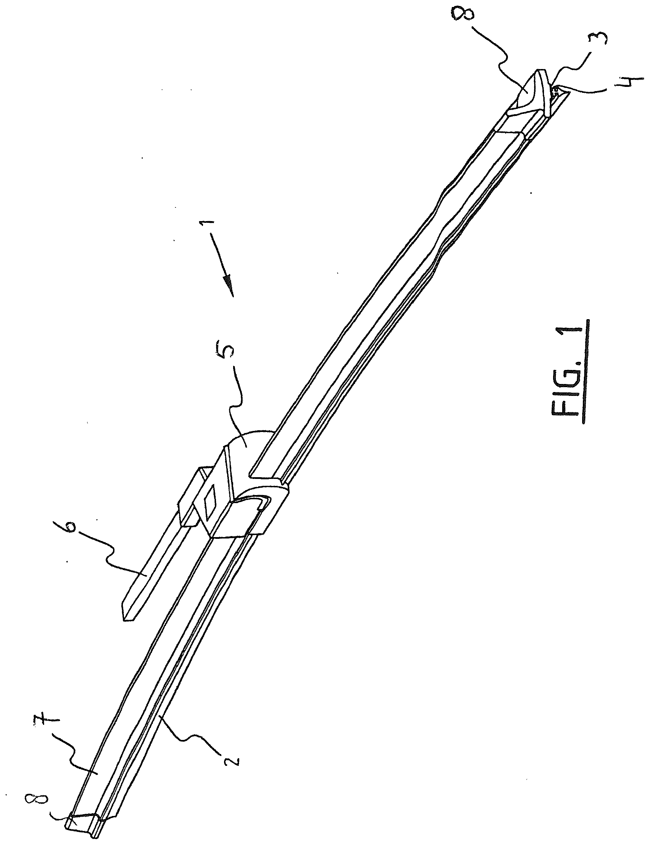

Figure 1 shows a windscreen wiper device 1 according to the prior art. Said windscreen wiper device 1 is built up of an elongated wiper blade 2 made of an elastomeric material. Said wiper blade 2 comprises a central longitudinal groove 3, in which a longitudinal strip 4 or flexor made of spring band steel is fitted. Said strip 4 forms a flexible carrier element for the rubber wiper blade 2, as it were, which is thus biased in a curved position (the curvature in operative position being that of a windscreen to be wiped).

The windscreen wiper device 1 is further equipped with a connecting device 5 for an oscillating arm 6, and a spoiler 7 made in one piece with said wiper blade 2. At both ends of said wiper blade 2, that is on either side of the windscreen wiper device 1, end caps 8 are provided.

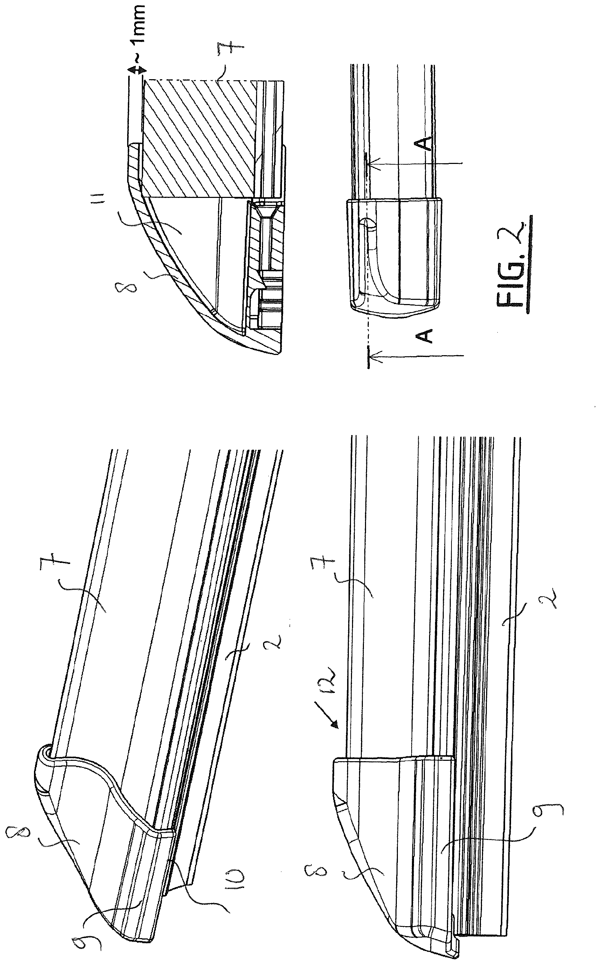

As can be seen in figure 2, lateral sides 9 of each end cap 8 are provided with engaging members 10 made integral therewith, wherein said engaging members 10 engage around an upper part of said wiper blade 2, so as to form a chamber 11 for sliding said upper part (including said spoiler 7) therein. Said engaging means 10 may include sidewardly extending gripping teeth made integral therewith, wherein said gripping teeth grip into an intermediate web of said wiper blade 2. It is noted that the teeth may only slightly penetrate the elastomeric (rubber) material of said wiper blade 2, without damaging the same. As shown in figure 2 and designated with reference numeral 12, the end cap 8 covers a top of said spoiler 7, i.e. said end cap is fitted approximately 1 mm higher than said spoiler 7.

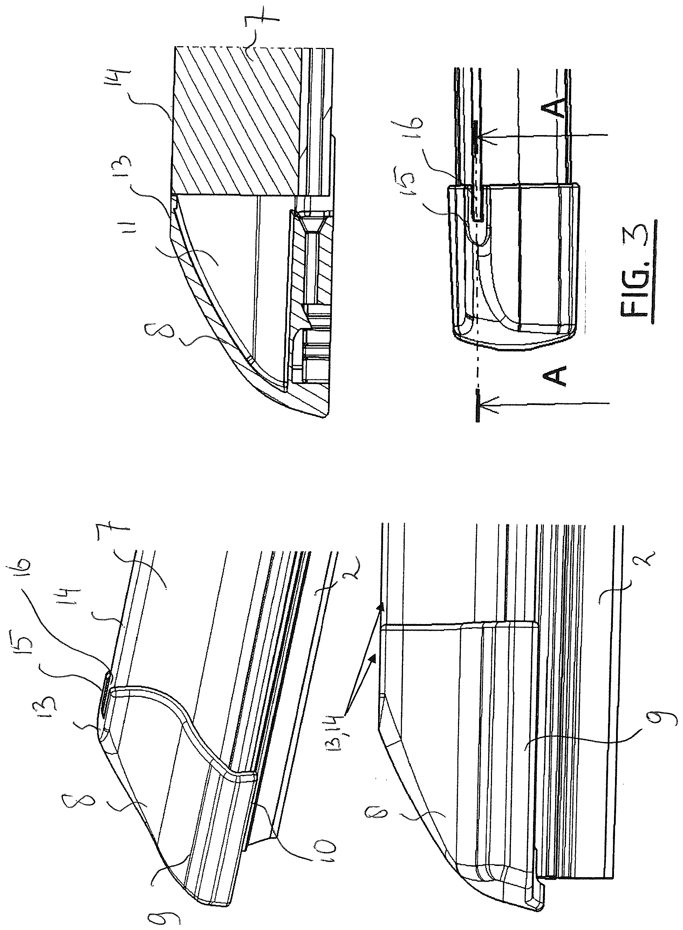

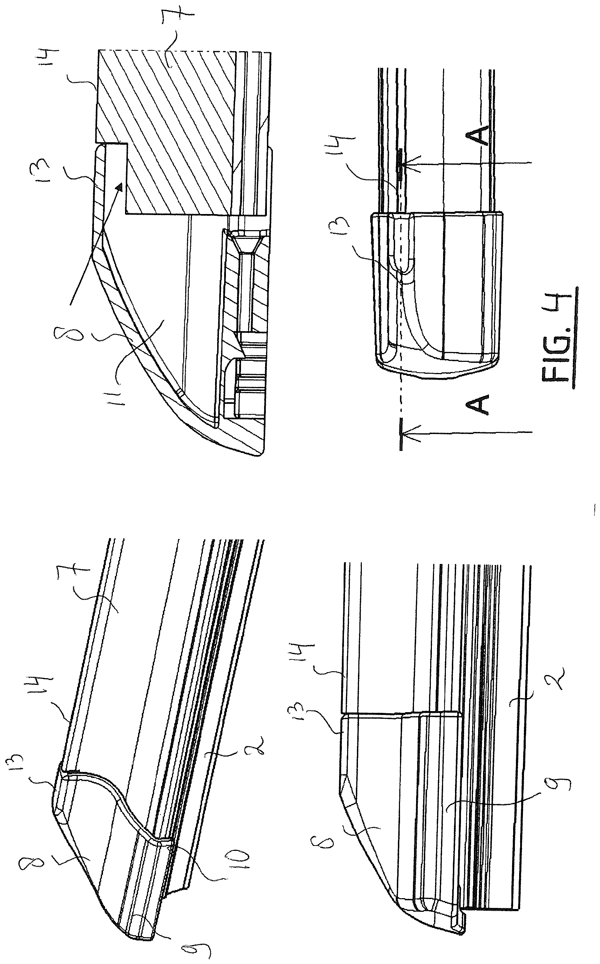

In figures 3 and 4 two embodiments of end caps 8 according to the invention are depicted, respectively, wherein parts that correspond to parts of the end caps 8 of the prior art seen in figures 1 and 2, are designated with the same reference numerals. In both embodiments of figures 3 and 4 both end caps 8 each comprise a top surface 13 abutting a top surface 14 of said spoiler 7, wherein said top surface 13 of said end cap 8 and said top surface 14 of said spoiler 7 extend in one horizontal plane. Preferably, in both embodiments said end caps 8 and said spoiler 7 are flush-interconnected through a snapping operation, so that said top surface 13 of said end caps 8 and said top surface 14 of said spoiler 7 extend in one horizontal plane.

With reference to figure 3, said end cap 8 comprises said chamber 11 for sliding the upper part of said wiper blade 2 (including said spoiler 7) therein in a longitudinal direction thereof. As shown, said top surface 13 of said end cap 8 comprises a slit 15 open at one end, and wherein a part 16 of said spoiler 7 is slid inside said slit 15. Accordingly, said end cap 8 does not cover said spoiler 7 due to the fact that said end cap 8 and said spoiler 7 have the same height. As a consequence, there is no threshold at a location where said end cap 8 abuts said spoiler 7.

Figure 4 corresponds to figure 3, wherein corresponding parts have been designated with the same reference numerals, on the understanding that in figure 4 said spoiler 7 is removed along a portion of the length of said wiper blade 2 at a free end of said wiper blade 2 so as to form an insertion part 17 of said spoiler 7. Said insertion part 17 of said spoiler 7 is slid inside said chamber 11 of said end cap 8. Also in figure 4 said end cap 8 does not cover said spoiler 7 due to the fact that said end cap 8 and said spoiler 7 have the same height. Again, there is no threshold at a location where said end cap 8 abuts said spoiler 7.

As in both embodiments of figures 3 and 4 said end caps 8 and said spoiler 7 mutually have the same height, the present windscreen wiper device 1 has a very flat construction, resulting in very good aerodynamic properties. Further, in mounted position said windscreen wiper device 1 does not interfere with other parts of a car and is hidden behind a bonnet thereof.

Although not shown in figures 1 through 4, but fully understood by a skilled person, said oscillating arm 6 is connected to a mounting head fixed for rotation to a shaft driven by a small motor. In use, the shaft rotates alternately in a clockwise and in a counter-clockwise sense carrying the mounting head into rotation also, which in turn draws said oscillating arm 8 into rotation and by means of said connecting device 5 moves said wiper blade 2.

The invention is not restricted to the embodiments shown, but also extends to other preferred embodiments falling within the scope of the appended claims.

## Claims

1. A windscreen wiper device (1) of the flat blade type comprising an elastic, elongated carrier element, as well as an elongated wiper blade (2) of a flexible material, which can be placed in abutment with a windscreen to be wiped, which wiper blade (2) includes at least one groove (3), in which groove (3) a longitudinal strip (4) of the carrier element is disposed, wherein free ends of said wiper blade (2) are connected to a respective end cap (8), wherein said end cap (8) comprises engaging members sidewardly engaging said wiper blade (2) from the outside, wherein said engaging members comprise retaining means for retaining said wiper blade (2) onto said end cap (8), which windscreen wiper device (1) comprises a connecting device (5) for an oscillating wiper arm (6), and wherein said wiper blade (2) is provided with a spoiler (7) at a side thereof facing away from said windscreen to be wiped, **characterized in that** at least one end cap (8) comprises a top surface (9) abutting a top surface (10) of said spoiler (7), wherein said top surface (9) of said end cap (8) and said top surface of said spoiler (7) extend in the same plane.

2. A windscreen wiper device (1) according to claim 1,
wherein said end cap (8) and said spoiler (7) are flush-interconnected through a snapping operation, so that said top surface (9) of said end cap (8) and said top surface of said spoiler (7) extend in the same plane.

3. A windscreen wiper device (1) according to claim 1 or 2, wherein said end cap (8) is slid over one of said free ends of said wiper blade (2) in a longitudinal direction thereof, wherein said top surface (10) of said end cap (8) comprises a slit open at one end, and wherein a part of said spoiler (7) is slid inside said slit.

4. A windscreen wiper device (1) according to claim 1 or 2, wherein said end cap (8) is slid over one of said free ends of said wiper blade (2) in a longitudinal direction thereof, wherein said spoiler (7) is removed along a portion of the length of said wiper blade (2) at said free end of said wiper blade (2) so as to form an insertion part of said spoiler (7), and wherein said insertion part of said spoiler (7) is slid inside said end cap (8).

5. A windscreen wiper device (1) according to any of the preceding claims 1 through 4, wherein said engaging members and said retaining means are in one piece.

6. A windscreen wiper device (1) according to claim 5, wherein said engaging members and said retaining means are formed by inwardly bent parts of edges of lateral sides of said end cap (8).

7. A windscreen wiper device (1) according to any of the preceding claims 1 through 6, wherein said retaining means comprises at least one sidewardly extending gripping tooth for gripping an intermediate web of said wiper blade (2).

## Patentansprüche

1. Scheibenwischervorrichtung (1) vom Flachblatttyp, umfassend ein elastisches, längliches Trägerelement, sowie ein längliches Wischerblatt (2) aus einem flexiblen Material, das in Anlage an eine zu wischende Scheibe angeordnet werden kann, wobei das Wischerblatt (2) wenigstens eine Nut (3) einschließt, wobei in der Nut (3) ein längslaufender Streifen (4) des Trägerelements angeordnet ist, wobei freie Enden des Wischerblatts (2) mit einer jeweiligen Endkappe (8) verbunden sind, wobei die Endkappe (8) Eingriffselemente umfasst, die seitlich in das Wischerblatt (2) von der Außenseite eingreifen, wobei die Eingriffselemente Haltemittel zum Halten des Wischerblatts (2) auf der Endkappe (8) umfassen, wobei die Scheibenwischervorrichtung (1) eine Verbindungsvorrichtung (5) für einen oszillierenden Wischerarm (6) umfasst, und wobei das Wischerblatt (2) mit einem Spoiler (7) an einer Seite davon bereitgestellt ist, die von der zu wischenden Scheibe abgewandt ist, **gekennzeichnet dadurch, dass** wenigstens eine Endkappe (8) eine obere Fläche (9) umfasst, die an einer oberen Fläche (10) des Spoilers (7) anliegt, wobei sich die obere Fläche (9) der Endkappe (8) und die obere Fläche des Spoilers (7) in der gleichen Ebene erstrecken.

2. Scheibenwischervorrichtung (1) nach Anspruch 1, wobei die Endkappe (8) und der Spoiler (7) durch einen Schnappvorgang bündig miteinander verbunden sind, so dass sich die obere Fläche (9) der Endkappe (8) und die obere Fläche des Spoilers (7) in derselben Ebene erstrecken.

3. Scheibenwischervorrichtung (1) nach Anspruch 1 oder 2, wobei die Endkappe (8) über eines der freien Enden des Wischerblatts (2) in einer längslaufenden Richtung davon geschoben wird, wobei die obere Fläche (10) der Endkappe (8) einen Schlitz umfasst, der an einem Ende offen ist, und wobei ein Teil des Spoilers (7) in den Schlitz geschoben wird.

4. Scheibenwischervorrichtung (1) nach Anspruch 1 oder 2, wobei die Endkappe (8) über eines der freien Enden des Wischerblatts (2) in einer längslaufenden Richtung davon geschoben ist, wobei der Spoiler (7) entlang eines Abschnitts der Länge des Wischerblatts (2) an dem freien Ende des Wischerblatts (2) entfernt ist, um ein Einsetzteil des Spoilers (7) zu bilden, und wobei das Einsetzteil des Spoilers (7) in die Endkappe (8) geschoben ist.

5. Scheibenwischervorrichtung (1) nach einem der vorhergehenden Ansprüche 1 bis 4, wobei die Eingriffselemente und die Haltemittel einstückig sind.

6. Scheibenwischervorrichtung (1) nach Anspruch 5, wobei die Eingriffselemente und die Haltemittel durch nach innen gebogene Teile von Kanten von lateralen Seiten der Endkappe (8) gebildet sind.

7. Scheibenwischervorrichtung (1) nach einem der vorhergehenden Ansprüche 1 bis 6, wobei das Haltemittel wenigstens einen sich seitlich erstreckenden Greifzahn zum Greifen eines Zwischenstegs des Wischerblatts (2) umfassen.

## Revendications

1. Dispositif balai d'essuie-glace (1) du type à lame plate, comprenant un élément porteur allongé, élastique, ainsi qu'une lame de balai (2) allongée, réalisée dans un matériau souple, qui peut être placée en butée contre un pare-brise à essuyer, laquelle lame de balai (2) comprend au moins une rainure (3), rainure (3) dans laquelle est disposée une bande longitudinale (4) de l'élément porteur, dans lequel les extrémités libres de ladite lame de balai (2) sont connectées à un bouchon d'extrémité respectif (8), dans lequel ledit bouchon d'extrémité (8) comprend des éléments de mise en prise qui viennent en prise de manière latérale avec ladite lame de balai (2) à partir de l'extérieur, dans lequel lesdits éléments de mise en prise comprennent des éléments de retenue destinés à retenir ladite lame de balai (2) sur ledit bouchon d'extrémité (8), lequel dispositif balai d'essuie-glace (1) comprend un dispositif de connexion (5) d'un bras de balai oscillant (6), et dans lequel ladite lame de balai (2) est dotée d'un déflecteur (7) au niveau d'un côté de celle-ci qui fait face en s'éloignant dudit pare-brise à essuyer, **caractérisé en ce qu'**un bouchon d'extrémité (8) au moins, comprend une surface supérieure (9) qui vient en butée contre une surface supérieure (10) dudit déflecteur (7), dans lequel ladite surface supérieure (9) dudit bouchon d'extrémité (8), et ladite surface supérieure dudit déflecteur (7), s'étendent dans le même plan.

2. Dispositif balai d'essuie-glace (1) selon la revendication 1, dans lequel ledit bouchon d'extrémité (8) et ledit déflecteur (7) sont interconnectés à fleur grâce à une action d'encliquetage, de telle sorte que ladite surface supérieure (9) dudit bouchon d'extrémité (8), et ladite la surface supérieure dudit déflecteur (7), s'étendent dans le même plan.

3. Dispositif balai d'essuie-glace (1) selon la revendication 1 ou 2, dans lequel ledit bouchon d'extrémité (8) est glissé sur l'une desdites extrémités libres de ladite lame de balai (2) dans la direction longitudinale de celle-ci, dans lequel ladite surface supérieure (10) dudit bouchon d'extrémité (8), comprend une fente ouverte au niveau d'une extrémité, et dans lequel une partie dudit déflecteur (7) est glissée à l'intérieur de ladite fente.

4. Dispositif balai d'essuie-glace (1) selon la revendication 1 ou 2, dans lequel ledit bouchon d'extrémité (8) est glissé sur l'une desdites extrémités libres de ladite lame de balai (2) dans la direction longitudinale de celle-ci, dans lequel ledit déflecteur (7) est retiré le long d'une partie de la longueur de ladite lame de balai (2) au niveau de ladite extrémité libre de ladite lame de balai (2), afin de former une partie insertion dudit déflecteur (7), et dans lequel ladite partie insertion dudit déflecteur (7) est glissée à l'intérieur dudit bouchon d'extrémité (8).

5. Dispositif balai d'essuie-glace (1) selon l'une quelconque des revendications précédentes 1 à 4, dans lequel lesdits éléments de mise en prise, et lesdits moyens de retenue, sont d'une seule pièce.

6. Dispositif balai d'essuie-glace (1) selon la revendication 5, dans lequel lesdits éléments de mise en prise, et lesdits moyens de retenue, sont formés par des parties coudées vers l'intérieur des bords des côtés latéraux dudit bouchon d'extrémité (8).

7. Dispositif balai d'essuie-glace (1) selon l'une quelconque des revendications précédentes 1 à 6, dans lequel lesdits moyens de retenue comprennent au moins une dent de préhension qui s'étend vers l'intérieur, destinée à saisir une âme intermédiaire de ladite lame de balai (2).
